(19) Europäisches Patentamt
European Patent Office
Office européen des brevets

(11) **EP 4 332 389 B1**

(12) **EUROPÄISCHE PATENTSCHRIFT**

(45) Veröffentlichungstag und Bekanntmachung des Hinweises auf die Patenterteilung:
**18.02.2026   Patentblatt 2026/08**

(21) Anmeldenummer: **23182010.1**

(22) Anmeldetag: **28.06.2023**

(51) Internationale Patentklassifikation (IPC):
*F16B 11/00* (2006.01)   *B29C 65/48* (2006.01)
*B29C 65/76* (2006.01)   *H05B 6/10* (2006.01)
*H05B 6/14* (2006.01)   *C09J 5/06* (2006.01)
*A63B 53/06* (2015.01)   *A63B 53/02* (2015.01)
*B29C 65/00* (2006.01)   *B29L 31/52* (2006.01)
*C09J 5/00* (2006.01)   *H05B 6/06* (2006.01)

(52) Gemeinsame Patentklassifikation (CPC):
**F16B 11/006; A63B 53/022; C09J 5/00; F16B 11/008; H05B 6/06;** A63B 2209/10; B29C 65/48; B29C 65/76; B29C 66/534; B29C 66/742; B29L 2031/5227; C09J 2203/354; C09J 2301/416; C09J 2301/502; C09J 2400/163;
(Forts.)

(54) **VERFAHREN UND VORRICHTUNG ZUM LÖSEN EINER VERBINDUNG**

METHOD AND DEVICE FOR RELEASING A CONNECTION

PROCÉDÉ ET DISPOSITIF DE LIBÉRATION D'UNE CONNEXION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **17.08.2022   DE 102022003002**

(43) Veröffentlichungstag der Anmeldung:
**06.03.2024   Patentblatt 2024/10**

(73) Patentinhaber: **IFF GmbH**
**85737 Ismaning (DE)**

(72) Erfinder:
• **LAMMEL, Christian**
**85737 Ismaning (DE)**
• **SCHUSTER, Ralf**
**96110 Scheßlitz (DE)**

(74) Vertreter: **Wiedemann, Markus**
**Ziegeleistraße 16**
**86399 Bobingen (DE)**

(56) Entgegenhaltungen:
**DE-U1- 202008 016 180     JP-B2- 4 552 066**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
F16B 2200/93

**Beschreibung**

Die Erfindung betrifft ein Verfahren zum Lösen einer Verbindung, welche wenigstens zwei Bauteile, ein erstes Bauteil und ein zweites Bauteil, und wenigstens eine Klebeschicht zwischen den Bauteilen aufweist, durch welche die wenigstens zwei Bauteile miteinander verbunden sind, wobei wenigstens das erste Bauteil elektrisch leitfähig ist, gemäß dem Oberbegriff von Anspruch 1, und eine Vorrichtung ausgebildet und eingerichtet zum Lösen der Verbindung gemäß dem Oberbegriff von Anspruch 7.

Ein solches Verfahren bzw. eine solche Vorrichtung sind aus DE 10 2005 055 611 A1 bekannt. Dort wird eine Verbindung, die zwei Bauteile und eine dazwischen angeordnete thermisch lösbare Klebeschicht umfasst durch eine Überlagerung von mechanischer und thermischer Beanspruchung der Klebeschicht aufgelöst. Die thermische Beanspruchung der Klebeschicht erfolgt mittels einer elektromagnetischen Wärmequelle und die mechanische Beanspruchung mittels einer statischen Last, die auf die beiden Bauteile aufgebracht wird. Durch die thermische Beanspruchung wird die Klebeschicht erweicht, geschwächt oder thermisch zerstört. Für das Aufbringen der statischen Last auf die Bauteile ist eine entsprechende zusätzliche Vorrichtung notwendig. Weiterhin entstehen bei der thermischen Erweichung oder Zerstörung der Klebeschicht Dämpfe, welche gesundheitliche Risiken mit sich bringen, so dass das Verfahren in einer geschlossenen Kabine stattfinden muss und die Dämpfe abgesaugt werden müssen. Weiterhin befinden sich dann Reste der durch die Temperatureinwirkung zerstörten Klebeschicht an den Bauteilen, welche deren Wiederverwendung beeinträchtigen.

Auch in JP 4 552066 B2 und in DE 20 2008 016180 U1 werden jeweils ein gattungsgemäßes Verfahren und eine gattungsgemäße Vorrichtung offenbart. Um dem Problem zu begegnen, dass durch ein Erhitzen über einen Schmelzpunkt der Klebeschicht hinaus die miteinander durch die Klebeschicht verbundenen Bauteile, dort ein Golfschlägerkopf und ein Golfschlägerschaft beschädigt werden, schlägt JP 4 552066 B2 eine Trennvorrichtung zum Trennen eines mit einem Golfschlägerschaft durch eine Klebung verbundenen Golfschlägerkopfes vor, bei welcher die Klebeschicht gezielt bis zu einer bestimmten Temperatur erhitzt wird, welche gerade zu einem Schmelzen der Klebeschicht führt, und dann durch die Trenneinrichtung eine mechanische Kraft zum Trennen des Golfschlägerkopfes vom Golfschlägerschaft aufgebracht wird. DE 20 2008 016180 U1 offenbart eine Induktionsvorrichtung zum Lösen von Klebeverbindungen, wobei das Lösen der Klebeverbindung auf einer adhäsiven (thermischen) Zerstörung der Klebeverbindung beruht.

Der vorliegenden Erfindung liegt die Aufgabe zugrunde, ein Verfahren und eine Vorrichtung zur Verfügung zu stellen, durch welches bzw. durch welche mit einfachen Mitteln ein umweltfreundliches und zugleich bauteilschonendes Lösen der Verbindung möglich ist.

Diese Aufgabe wird erfindungsgemäß durch die Merkmale der Ansprüche 1 und 7 gelöst.

Offenbarung der Erfindung

Die Erfindung geht gemäß einem ersten Aspekt aus von einem Verfahren zum Lösen einer Verbindung, welche wenigstens zwei Bauteile, ein erstes Bauteil und ein zweites Bauteil, und eine wenigstens eine Klebeschicht zwischen den wenigstens zwei Bauteilen aufweist, durch welche die wenigstens zwei Bauteile miteinander verbunden sind, wobei wenigstens das erste Bauteil elektrisch leitfähig ist, umfassend einen Schritt des Erwärmens wenigstens des ersten Bauteils mittels eines elektromagnetischen Felds. Mit anderen Worten wird daher zumindest das erste Bauteil der Verbindung elektromagnetisch erwärmt.

Erfindungsgemäß ist bei dem ersten Aspekt vorgesehen, dass das Erwärmen wenigstens des ersten Bauteils oder insbesondere im Wesentlichen ausschließlich des ersten Bauteils mittels des elektromagnetischen Felds derart erfolgt, dass zwischen den wenigstens zwei Bauteilen ein Wärmeausdehnungs-Gradient $\Delta X$ und/oder ein Temperatur-Gradient $\Delta T$ entsteht, der zwischen den wenigstens zwei Bauteilen Relativbewegungen und insbesondere infolgedessen mechanische Spannungen hervorruft, welche die wenigstens eine Klebeschicht ausschließlich mechanisch zerstören. Insbesondere wird lediglich das erste Bauteil mittels des elektromagnetischen Felds erwärmt.

Wenn daher unter dem Einfluss des elektromagnetischen Felds das erste Bauteil eine erste Wärmeausdehnung X1 und das zweite Bauteil eine zweite Wärmeausdehnung X2 erfährt, so ergibt sich der Wärmeausdehnungs-Gradient $\Delta X$ zu:

$$\Delta X = X1 - X2 \qquad (1)$$

In analoger Weise, wenn unter dem Einfluss des elektromagnetischen Felds das erste Bauteil eine erste Temperatur T1 und das zweite Bauteil eine zweite Temperatur T2 aufweist, so ergibt sich der Temperatur-Gradient $\Delta T$ zu:

$$\Delta T = T1 - T2 \qquad (2)$$

Es ist dabei klar, dass die Temperaturen Ti und die Wärmeausdehnungen Xi zeitabhängige Größen sind, welche sich abhängig vom Beginn der Aktivierung und der Zeitdauer des elektromagnetischen Felds ändern. Bei der hier anzustrebenden, vorzugsweise ausschließlichen mechanischen Zerstörung der wenigstens einen Klebeschicht kann auch die erste Erwärmungsgeschwindigkeit $\Delta T1/t$ des ersten Bauteils und/oder die zweite Erwärmungsgeschwindigkeit $\Delta T2/t$ eine Rolle spielen, wie weiter unten noch erläutert wird.

Im Gegensatz zu dem eingangs genannten Stand der Technik besteht daher das Ziel der Erwärmung insbesondere im Wesentlichen ausschließlich des ersten Bauteils, optional auch des zweiten Bauteils durch das elektromagnetische Feld nicht darin, die wenigstens eine Klebeschicht thermisch zu schwächen oder zu zerstören, sondern zwischen den Bauteilen mechanische Spannungen hervorzurufen, insbesondere durch gezielte und schnelle Erwärmung insbesondere im Wesentlichen ausschließlich des ersten Bauteils, welche die wenigstens eine Klebeschicht durch einen erzwungenen Adhäsionsbruch ausschließlich mechanisch zerstören. Solche Relativbewegungen und mechanische Spannungen zwischen den Bauteilen basieren insbesondere auf unterschiedlichen Wärmeausdehnungen Xi der Bauteile infolge einer beispielsweise lokalen Erwärmung lediglich des ersten Bauteils. Dann kann auf eine zusätzliche Vorrichtung zum Aufbringen einer mechanischen Last auf die Bauteile verzichtet werden, weil die mechanische Last auf die Bauteile oder zwischen den Bauteilen allein aufgrund der (gezielten) elektromagnetischen Erwärmung der Verbindung entsteht.

Die Zeitdauer t und/oder der Umfang der elektromagnetischen Erwärmung (Amplitude A und/oder Frequenz f der elektromagnetischen Strahlung bzw. des elektromagnetischen Felds), die aus der Erwärmung hervorgehende erste Temperatur T1 des ersten Bauteils, optional auch die zweite Temperatur T2 des zweiten Bauteils und/oder die Erwärmungsgeschwindigkeit(en) (Temperaturänderung je Zeit, $\Delta T1/t$, $\Delta T2/t$) des ersten Bauteils und/oder des zweiten Bauteils kann in einer Steuerung (vor-)programmiert sein oder durch eine mit der Steuerung zusammenwirkende Mensch-/Maschine-Schnittstelle programmierbar oder einstellbar sein. Diese Programmierung oder Einstellung wird derart vorgenommen, dass zwischen den Bauteilen ein Wärmeausdehnungs-Gradient und/oder ein Temperatur-Gradient entsteht, der für die ausschließliche mechanische Zerstörung der wenigstens einen Klebeschicht sorgt, aber eine thermische Zerstörung der wenigstens einen Klebeschicht vermeidet.

Daher wird die wenigstens eine Klebeschicht ausschließlich mechanisch zerstört, aber eine thermische Erweichung oder Zerstörung der (gesamten) Klebeschicht vermieden. Dies hat den Vorteil, dass bei dem Verfahren bzw. bei der Anwendung der Vorrichtung keine toxischen Dämpfe infolge einer hier unerwünschten thermischen Schädigung oder Zerstörung der Klebeschicht entstehen, welche ein Vorsehen einer gasdichten Prozesskammer samt Absaugung entbehrlich machen. Weiterhin findet dann eine bauteilschonende Trennung der Bauteile statt, insbesondere weil die Temperatur für die Erzeugung der mechanischen Spannungen, die für die mechanische Zerstörung der wenigstens einen Klebeschicht sorgen, deutlich niedriger ist als die für eine Klebstoff-Pyrolyse benötigte Temperatur.

Daher wird erfindungsgemäß wenigstens das erste Bauteil, optional auch das zweite Bauteil mittels des elektromagnetischen Felds mit einer Temperatur T1 bzw. T2 und/oder mit einer Erwärmungsgeschwindigkeit $\Delta T1/t$ bzw. $\Delta T1/t$ (Temperaturzunahme je Zeit) erwärmt, durch welche

a) einerseits der Wärmeausdehnungs-Gradient $\Delta T$ und/oder der Temperatur-Gradient $\Delta T$ zwischen den wenigstens zwei Bauteilen entsteht, der zwischen den wenigstens zwei Bauteilen die mechanischen Spannungen und die Relativbewegungen hervorruft, welche die wenigstens eine Klebeschicht ausschließlich mechanisch zerstören, aber durch welche
b) andererseits eine thermische Zerstörung der wenigstens einen Klebeschicht vermieden wird.

Dies kann beispielsweise dadurch erreicht werden, dass die Erwärmungsgeschwindigkeit $\Delta T/t$ eine beispielsweise vorgegebene Grenz-Erwärmungsgeschwindigkeit überschreitet, die größer als Null ist. Weiterhin bevorzugt ist die Erwärmungszeitdauer $\Delta t$, in welcher wenigstens das erste Bauteil, optional auch das zweite Bauteil erwärmt wird, vorzugsweise kleiner als eine beispielsweise vorgegebene Grenz-Erwärmungszeitdauer $\Delta t_{grenz}$, die größer als Null ist.

Bevorzugt erfolgt die Erwärmung wenigstens des ersten Bauteils mit kurzer Erwärmungszeitdauer $\Delta t$, d.h. mit hoher Erwärmungsgeschwindigkeit, was zu einem sich schnell einstellenden hohen Temperaturgradienten $\Delta T$ zwischen den Bauteilen führt. Dann ist die Zeit zu gering, dass die hauptsächlich in dem ersten Bauteil entstehende Wärme die wenigstens eine Klebeschicht erreicht bzw. diese durchwärmt, wodurch deren thermische Erweichung oder thermische Zerstörung vermieden werden kann. Dieser Effekt tritt vor allem dann ein, wenn das erste Bauteil aus einem Material besteht, welches einen hohen Wärmeausdehnungskoeffizienten aufweist, wie beispielsweise Metalle wie Aluminium oder Stahl.

Wenigstens das erste Bauteil ist elektrisch leitfähig, um durch das elektromagnetische Feld erwärmt werden zu können. Weiterhin kann wenigstens das erste Bauteil aus wenigstens einem ferromagnetischen Werkstoff wie einem ferromagnetischen Metall bestehen oder wenigstens einen ferromagnetischen Werkstoff wie ein ferromagnetisches Metall umfassen. Zusätzlich kann das zweite Bauteil ebenfalls elektrisch leitfähig sein und insbesondere aus wenigstens einem ferromagnetischen Werkstoff wie einem ferromagnetischen Metall bestehen oder wenigstens einen ferromagnetischen Werkstoff wie ein ferromagnetisches Metall umfassen. Auch kann das zweite Bauteil aus einem beliebigen Werkstoff bestehen, welcher von einem ferromagnetischen Werkstoff abweicht, da es für das oben beschriebene Erzeugen von Relativbewegungen und Spannungen völlig ausreicht, wenn sich insbesondere im Wesentlichen ausschließlich das erste Bauteil infolge der Erwärmung durch das elektromagnetische Feld ausdehnt.

Beispielsweise können die Bauteile flächige plattenförmige Bauteile sein und die mechanischen Spannungen können Schubspannungen umfassen, welche in der wenigstens einen Klebeschicht oder parallel zu der wenigstens einen Klebeschicht wirkende Scherkräfte und/oder Relativbewegungen zwischen den flächigen Bauteilen hervorrufen. Die Bauteile können insbesondere Metallbleche sein oder solche umfassen.

Alternativ können die Bauteile wenigstens im Bereich der wenigstens einen Klebeschicht insbesondere koaxial ineinander ragende rohrförmige oder zylindrische oder konische Bauteile oder Bauteile mit Polygon-Querschnitt sein und die mechanischen Spannungen in radialer Richtung wirkende Zugspannungen zwischen den Bauteilen umfassen, welche senkrecht zur der wenigstens einen Klebeschicht wirkenden Zugkräfte und/oder Relativbewegungen zwischen den Bauteilen hervorrufen. Ineinander ragende Bauteile meint, dass beispielsweise das zweite Bauteil wenigstens abschnittsweise in eine Öffnung des ersten Bauteils hineinragt, oder dass das erste Bauteil wenigstens abschnittsweise in eine Öffnung des zweiten Bauteils hineinragt. Insbesondere kann die wenigstens eine Klebeschicht im Querschnitt gesehen umlaufend sein und radial zwischen einer radial inneren Oberfläche des zweiten Bauteils und einer radial äußeren Oberfläche des ersten Bauteils oder radial zwischen einer radial inneren Oberfläche des ersten Bauteils und einer radial äußeren Oberfläche des zweiten Bauteils angeordnet sein oder diese Oberflächen adhäsiv miteinander verbinden. Insbesondere kann auch das erste Bauteil das zweite Bauteil wenigstens teilweise umschließen, umgreifen oder in sich aufnehmen.

Damit insbesondere radiale Zugspannungen zwischen solchen rohrförmigen oder zylindrischen Bauteilen oder Bauteilen mit Polygon-Querschnitt entstehen, kann das erste Bauteil beispielsweise ein radial äußeres Bauteil und das zweite Bauteil ein radial inneres Bauteil bilden. Infolge einer beispielsweise exklusiven Erwärmung des ersten Bauteils vergrößert sich dann der Radius des radial äußeren ersten Bauteils, während das radial innere zweite Bauteil, welches von der Erwärmung nicht oder in geringerem Umfang betroffen ist, im Wesentlichen nicht erwärmt oder weniger erwärmt wird, so dass sich der Radius des zweiten Bauteils im Wesentlichen nicht ändert.

Gemäß einer weiteren möglichen Ausführung kann das erste Bauteil plattenförmig ausgebildet und das zweite Bauteil rohrförmig oder zylindrisch oder konisch ausgebildet sein oder einen Polygon-Querschnitt aufweisen. Umgekehrt kann das zweite Bauteil plattenförmig ausgebildet und das erste Bauteil rohrförmig oder zylindrisch oder konisch ausgebildet sein oder einen Polygon-Querschnitt aufweisen.

Das erfindungsgemäße Verfahren wird daher zum Lösen einer Verbindung angewendet, bei welcher wenigstens das erste Bauteil elektrisch leitfähig ist und insbesondere aus wenigstens einem ferromagnetischen Werkstoff wie einem ferromagnetischen Metall besteht oder wenigstens einen ferromagnetischen Werkstoff wie ein ferromagnetisches Metall umfasst.

Bevorzugt wird das elektromagnetische Feld mittels einer Induktionseinrichtung erzeugt, welche wenigstens einen Induktor umfasst. Hierbei wird der Induktor insbesondere ausschließlich an dem ersten Bauteil oder ausschließlich im Bereich des ersten Bauteils angeordnet und die Induktionseinrichtung derart gesteuert, dass das elektromagnetische Feld im Wesentlichen vollständig in das erste Bauteil eingekoppelt wird. Mit anderen Worten erfolgt dann im Wesentlichen keine Einkopplung des von dem Induktor ausgehenden elektromagnetischen Felds in die wenigstens eine Klebeschicht und/oder in das zweite Bauteil. Durch die im Wesentlichen vollständige Einkopplung des elektromagnetischen Felds in das erste Bauteil bildet dann das erste Bauteil eine Art Abschirmung gegenüber der Klebeschicht und/oder gegenüber dem zweiten Bauteil. Beispielsweise kann dabei aber nicht ausgeschlossen werden, dass infolge des elektromagnetischen Felds maximal eine direkt an dem ersten Bauteil anhaftende Grenzschicht der Klebeschicht thermisch zerstört wird. Maximal bedeutet, dass die von der Grenzschicht abweichende restliche Klebeschicht keine thermische Erweichung oder Zerstörung infolge der Erwärmung durch das elektromagnetische Feld erfährt. Auch kann der Induktor insbesondere derart lediglich an dem ersten Bauteil angeordnet und die Induktionseinrichtung derart gesteuert werden, dass im Wesentlichen ausschließlich das erste Bauteil induktiv erwärmt wird, aber das zweite Bauteil durch den Induktor im Wesentlichen keine Erwärmung erfährt. Dies kann beispielsweise dadurch realisiert werden, dass der Induktor direkt oder indirekt an dem ersten Bauteil oder im Bereich des ersten Bauteils angeordnet, das erste Bauteil kontaktiert oder mit dem ersten Bauteil verbunden wird.

Ein zweiter Aspekt der Erfindung gemäß Anspruch 7 betrifft eine Vorrichtung zur Ausführung des oben beschriebenen Verfahrens, umfassend eine durch eine Steuerung gesteuerte oder geregelte Heizeinrichtung, welche ausgebildet und eingerichtet ist, das elektromagnetische Feld zu erzeugen und wenigstens das erste Bauteil und insbesondere lediglich das erste Bauteil durch das elektromagnetische Feld zu erwärmen.

Der zweite Aspekt der Erfindung betrifft eine Vorrichtung ausgebildet und eingerichtet zum Lösen einer Verbindung, welche wenigstens zwei Bauteile, ein erstes Bauteil und ein zweites Bauteil, und wenigstens eine Klebeschicht zwischen den wenigstens zwei Bauteilen aufweist, durch welche die wenigstens zwei Bauteile miteinander verbunden sind, wobei wenigstens das erste Bauteil elektrisch leitfähig ist, umfassend eine durch eine Steuerung gesteuerte oder geregelte Heizeinrichtung, welche ausgebildet und eingerichtet ist, wenigstens das erste Bauteil durch ein elektromagnetisches Feld zu erwärmen.

Bei dem zweiten Aspekt ist erfindungsgemäß vorgesehen, dass die Heizeinrichtung (10) mittels der Steuerung derart gesteuert oder geregelt ist, dass infolge der Erwärmung wenigstens des ersten Bauteils mittels des elektromagnetischen Felds zwischen den wenigstens zwei Bauteilen ein Wärmeausdehnungs-Gradient $\Delta X$ und/oder ein Temperatur-Gradient $\Delta T$ entsteht, der zwischen den wenigstens zwei Bauteilen Relativbewegungen und mechanische Spannungen hervorruft, welche die wenigstens eine Klebeschicht ausschließlich mechanisch zerstören.

Die Vorrichtung kann ausgebildet und eingerichtet sein zum Lösen einer Verbindung, bei welcher die Bauteile plattenförmige Bauteile sind, wobei die mechanischen Spannungen Schubspannungen umfassen, welche in der wenigstens einen Klebeschicht oder parallel zu der wenigstens einen Klebeschicht wirkende Scherkräfte und/oder Relativbewegungen zwischen den Bauteilen hervorrufen, welche parallel zu den Bauteilen sind.

Auch kann die Vorrichtung ausgebildet und eingerichtet sein zum Lösen einer Verbindung, bei welcher die Bauteile wenigstens im Bereich der wenigstens einen Klebeschicht ineinander ragende rohrförmige oder zylindrische Bauteile oder Bauteile mit einem Polygon-Querschnitt sind, wobei die mechanischen Spannungen in radialer Richtung wirkende Zugspannungen zwischen den Bauteilen umfassen, welche senkrecht zur der wenigstens einen Klebeschicht wirkende Zugkräfte und/oder Relativbewegungen zwischen den Bauteilen hervorrufen, welche bezogen auf die Bauteile in radialer Richtung verlaufen.

Auch kann die Vorrichtung ausgebildet und eingerichtet sein zum Lösen einer Verbindung, bei welcher ein Bauteil rohrförmig oder zylindrisch oder konisch ausgebildet ist oder einen Polygon-Querschnitt aufweist und das andere Bauteil flächig oder plattenförmig ausgebildet ist.

Insbesondere kann die Heizeinrichtung eine Induktionseinrichtung mit wenigstens einem Induktor umfassen, welche ausgebildet und eingerichtet ist, wenigstens oder im Wesentlichen ausschließlich das erste Bauteil induktiv zu Erwärmen. Der Induktor kann wenigstens eine durch Wechselstrom gespeiste Induktionsspule zum Erwärmen wenigstens oder im Wesentlichen ausschließlich des ersten Bauteils durch das elektromagnetische Feld umfassen. Auch kann die Induktionseinrichtung einen Generator aufweisen, der den Wechselstrom an die wenigstens eine Induktionsspule liefert. Darüber hinaus kann die Induktionseinrichtung eine programmierbare Steuerung aufweisen, die den Generator steuert, um insbesondere die Frequenz und/oder die Amplitude des Wechselstroms und/oder der elektromagnetischen Strahlung, und/oder die Zeitdauer der Erzeugung des Wechselstroms und/oder der elektromagnetischen Strahlung einzustellen oder zu variieren.

Bei der Vorrichtung kann die Induktionseinrichtung durch die Steuerung derart steuerbar und der Induktor derart an der Verbindung anordenbar oder angeordnet sein, dass durch den Induktor im Wesentlichen lediglich das erste Bauteil induktiv erwärmt wird, aber das zweite Bauteil durch den Induktor im Wesentlichen keine Erwärmung erfährt. Die Vorteile einer solchen Maßnahme wurden im Zusammenhang mit dem Verfahren oben erläutert.

Gemäß einer weiterbildenden Maßnahme kann die Vorrichtung ausgebildet und eingerichtet sein zum Lösen einer Verbindung, welche einen Kopf eines Golfschlägers als erstes Bauteil und ein Ende eines Schafts des Golfschlägers als zweites Bauteil sowie eine Klebeschicht umfasst, die radial zwischen dem in eine Öffnung des Kopfes ragenden Ende des Schafts und der Öffnung des Kopfes ausgebildet ist.

In analoger Weise wird bei dem Verfahren gemäß dem ersten Aspekt als erstes Bauteil ein Kopf eines Golfschlägers und als zweites Bauteil ein Ende eines Schafts des Golfschlägers herangezogen, wobei die Klebeschicht radial zwischen einem in eine Öffnung des Kopfes ragenden Ende des Schafts und der Öffnung des Kopfes ausgebildet ist. Nur mit der erfindungsgemäßen Vorrichtung bzw. mit dem erfindungsgemäßen Verfahren ist es dann möglich, einen kurz abgebrochenen Schaft aus dem Golfschlägerkopf zu entfernen. Ansonsten müsste der abgebrochene und im Golfschlägerkopf verbliebene Teil des Schafts ausgebohrt werden.

Dabei kann die Vorrichtung insbesondere eine Aufnahmeeinrichtung für den Golfschläger aufweisen, welche mit der Steuerung derart zusammenwirkt, dass die Heizeinrichtung insbesondere nur dann aktiviert wird, wenn der Golfschläger in der Aufnahmeeinrichtung aufgenommen ist. Die Aufnahmeeinrichtung kann ausgebildet sein, dass sie den Golfschläger fest, z.B. in einer Spanneinrichtung der Aufnahmeeinrichtung oder lose aufnimmt, d.h. mit einem gewissen Spiel.

Auch kann die Vorrichtung einen derart angeordneten und mit der Steuerung zusammenwirkenden elektrischen Schalter aufweisen, dass wenn der Golfschläger von der Aufnahmeeinrichtung aufgenommen ist oder in der Aufnahmeeinrichtung aufgenommen wird, der elektrische Schalter automatisch in eine erste Stellung betätigt oder geschaltet wird, in welcher die Steuerung die Heizeinrichtung aktiviert, um die Verbindung elektromagnetisch zu erwärmen.

Der elektrische Schalter kann von einem Betätigungsorgan betätigt sein. Das Betätigungsorgan kann beispielsweise einen aus- und einfahrbaren Taster umfassen. Der Taster kann beispielsweise in eine ausgefahrene Stellung federvorgespannt sein. Durch einen Wechsel zwischen der ausgefahrenen und einer eingefahrenen Stellung des Tasters kann dann der elektrische Schalter betätigt oder von der ersten Stellung in eine zweite Stellung (um)geschaltet werden. Wenn der Golfschläger von der Aufnahmeeinrichtung aufgenommen ist oder in der Aufnahmeeinrichtung aufgenommen wird, dann kann der Taster von dem Golfschläger beispielsweise in die eingefahrene Stellung betätigt werden. Wenn hingegen der Golfschläger aus der Aufnahmeeinrichtung entnommen ist oder entnommen wird, dann nimmt der Taster beispielsweise automatisch die ausgefahrene Stellung ein, insbesondere durch die Federvorspannung. Das Betätigungsorgan des elektrischen Schalters kann beliebig ausgebildet sein und beispielsweise anstatt eines Tasters auch einen Hebel umfassen.

Der elektrische Schalter und die Aufnahmeeinrichtung können weiterhin angeordnet und ausgebildet sein, dass wenn der Golfschläger in der Aufnahmeeinrichtung aufgenommen ist oder in der Aufnahmeeinrichtung aufgenommen wird, das Gewicht des Golfschlägers wenigstens dazu beiträgt, den elektrischen Schalter in die erste Stellung zu betätigen oder zu schalten. Auch kann das Schalten oder Betätigen des elektrischen Schalters in die erste Stellung ausschließlich durch das Gewicht des Golfschlägers bedingt sein.

Der Schalter kann mit der Steuerung auch derart zusammenwirken, dass wenn der Golfschläger aus der Aufnahmeeinrichtung entfernt wird, der Schalter in die zweite Stellung betätigt oder geschaltet wird, in welcher die Steuerung die Heizeinrichtung deaktiviert oder in einen inaktiven Zustand versetzt. Das Entfernen des Golfschlägers aus der Aufnahmeeinrichtung kann eine hinreichende oder notwendige Bedingung dafür sein, dass die Steuerung die Heizeinrichtung deaktiviert oder in einen inaktiven Zustand versetzt.

Die Steuerung kann auch ausgebildet sein, dass sie aufgrund eines gespeicherten Heizprogramms, in welchem eine Zeitdauer der Aktivierung der Heizeinrichtung bzw. der Beheizung der Verbindung festgelegt ist, die Heizeinrichtung nach Ablauf dieser Zeitdauer automatisch deaktiviert oder in einen inaktiven Zustand versetzt. In diesem Fall wird die Heizeinrichtung zwar durch das Einlegen des Golfschlägers in die Aufnahmeeinrichtung aktiviert, jedoch ist die Heizdauer unabhängig von dem Entfernen des Golfschlägers aus der Aufnahmeeinrichtung.

Das erfindungsgemäße Verfahren und die erfindungsgemäße Vorrichtung können zum Lösen bzw. Entkleben jeglicher Arten von Verbindungen eingesetzt werden, insbesondere auch zum Entkleben oder Lösen einer durch eine Klebeschicht miteinander verklebte Bleche umfassenden Verbindung, insbesondere Bleche einer Karosserie eines Fahrzeugs.

Zeichnung

Nachstehend sind Ausführungsbeispiele der Erfindung in der Zeichnung dargestellt und in der nachfolgenden Beschreibung näher erläutert. In der Zeichnung zeigt

Fig.1      eine schematische Darstellung einer Ausführungsform einer Vorrichtung gemäß der Erfindung, ausgebildet und eingerichtet zum Lösen einer Verbindung, welche zwei flächige plattenförmige Bauteile, ein erstes Bauteil und ein zweiten Bauteil und wenigstens eine Klebeschicht zwischen den Bauteilen aufweist;

Fig.2      eine schematische Darstellung einer weiteren Ausführungsform der Vorrichtung gemäß der Erfindung, welche für ein Lösen einer Verbindung aus rohrförmigen Bauteilen ausgebildet ist;

Fig.3      eine schematische Darstellung eines Golfschlägers;

Fig. 4     eine schematische Darstellung einer weiteren Ausführungsform einer Vorrichtung gemäß der Erfindung, welche für ein Lösen einer Verbindung des Golfschlägers von Fig. 3 ausgebildet ist, mit dem in einer Aufnahmeeinrichtung der Vorrichtung aufgenommenen Golfschläger;

Fig. 5A    eine Seitenansicht der Aufnahmeeinrichtung von Fig. 4;

Fig. 5B    eine Draufsicht auf die Aufnahmeeinrichtung von Fig. 4;

Fig. 6     ein Diagramm, das die Temperatur T1 des ersten Bauteils von Fig. 1 abhängig von der Zeit t illustriert.

Beschreibung der Ausführungsbeispiele

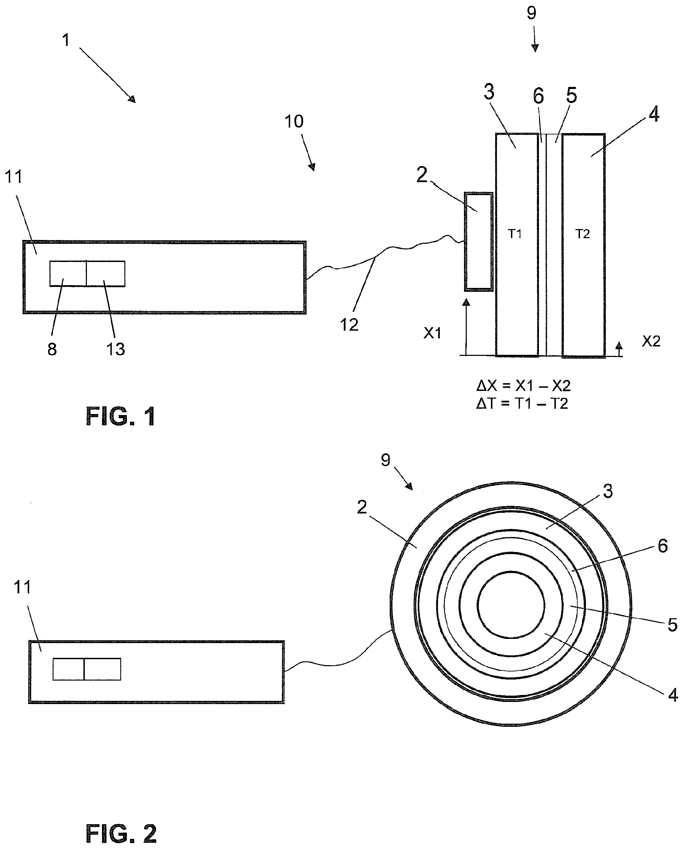

In **Fig. 1** ist schematisch eine Ausführungsform einer Vorrichtung 1 gezeigt, die ausgebildet und eingerichtet zum Lösen einer Verbindung 9, welche hier beispielsweise zwei flächige plattenförmige Bauteile, ein erstes Bauteil 3 und ein zweites Bauteil 4 und eine Klebeschicht 5 zwischen den beiden Bauteilen 3, 4 aufweist. Hier beispielsweise sind beide Bauteile 3, 4 flächig plattenförmig ausgebildet, parallel zueinander angeordnet und bestehen beispielsweise beide aus einem ferromagnetischen Material, insbesondere jeweils als Stahlblech einer Karosserie eines Fahrzeugs. Alternativ kann auch lediglich das erste Bauteil 3 aus einem ferromagnetischen Material bestehen, während das zweite Bauteil 4 aus einem von einem ferromagnetischen Material abweichenden Material besteht, beispielsweise aus Aluminium oder aus Kunststoff.

Die Klebeschicht 5 verbindet insofern die beiden Bauteile fest miteinander. Es kann wünschenswert sein, die beiden Bauteile 3, 4 voneinander zu lösen, beispielsweise wenn einzelne Karosseriebauteile nach einem Unfall des Fahrzeugs ausgetauscht werden müssen und dazu die dazwischen angeordnete Klebeschicht 5 gelöst oder zerstört werden muss.

Die Vorrichtung 1 umfasst als Heizeinrichtung hier beispielsweise eine Induktionseinrichtung 10 mit einem hier beispielsweise plattenförmigen Induktor 2.

Der Induktor 2 umfasst hier beispielsweise eine durch Wechselstrom gespeiste Induktionsspule zum Erwärmen der Verbindung 9 durch elektromagnetische Strahlung. Auch weist die Induktionseinrichtung 10 einen Generator 11 auf, der den Wechselstrom über ein Kabel 12 an den Induktor 2 liefert. Der Generator 11 weist eine programmierbare Steuerung 8 auf, um als Heizparameter insbesondere die Frequenz und/oder die Amplitude des Wechselstroms und/oder die Zeitdauer der Erzeugung des Wechselstroms vorzugeben, einzustellen oder zu variieren. Heizparameter können insbesondere in einem Heizprogramm oder in mehreren verschiedenen Heizprogrammen der Steuerung 8 hinterlegt sein. Gemäß einer Ausführung können durch eine mit der Steuerung 8 zusammenwirkende Mensch-/Maschine-Schnittstelle 13, beispielsweise eine Benutzeroberfläche des Generators 11, Heizparameter eingestellt oder verändert werden. Die Mensch-/Maschine-Schnittstelle 13 kann aber auch Bestandteil einer Anwendung sein, die auf einem Smart-Phone läuft, wobei das Smart-Phone dann drahtlos mit der Steuerung 8 verbunden werden kann, um wenigstens einen Heizparameter einzustellen.

Beispielsweise kann auch über die Mensch-/Maschine-Schnittstelle 13 ein bestimmtes Heizprogramm aus einer Mehrzahl von Heizprogrammen auswählbar sein, wobei die Mehrzahl von Heizprogrammen in einem Speicher der Steuerung 8 implementiert sind. Über die Mensch-/Maschine-Schnittstelle 13 kann beispielsweise auch die Heizleistung und/oder die Heizdauer eingestellt werden.

Wie Fig. 1 zeigt, ist der Induktor 2 hier beispielsweise flächig und direkt an dem ersten Bauteil 3 angeordnet bzw. kontaktiert dieses. Die Erwärmung oder Beheizung hier beispielsweise ausschließlich des ersten Bauteils 3 der Verbindung 9 durch die Induktionseinrichtung 10 erfolgt hier beispielsweise durch ein im Speicher der Steuerung 8 hinterlegtes Heizprogramm. Da der Induktor 2 das erste Bauteil 3 hier beispielsweise direkt kontaktiert, wird das von dem Induktor ausgestrahlte elektromagnetische Feld im Wesentlichen ausschließlich in das erste Bauteil 3 eingekoppelt, während die Klebeschicht 5 und das zweite Bauteil 4 hinsichtlich des elektromagnetischen Felds dann von dem ersten Bauteil 3 abgeschirmt sind. Dann können weder die Klebeschicht 5 noch das zweite Bauteil 4 von dem elektromagnetischen Feld erwärmt werden. Auch kann eine entsprechende Programmierung oder Einstellung der Steuerung 8 oder des Heizprogramms im Hinblick auf Heizparameter wie Amplitude und/oder Frequenz und/oder Heizdauer (Wirkzeit des von dem Induktor 2 emittierten elektromagnetischen Felds) dazu beitragen, dass im Wesentlichen lediglich das erste Bauteil durch das elektromagnetische Feld erwärmt wird, nicht aber die Klebeschicht 5 und das zweite Bauteil 4.

Bedingt durch die (fast) ausschließliche (schnelle) Beheizung des ersten Bauteils 3 durch den Induktor 2 entsteht zwischen den beiden Bauteilen 3, 4 insbesondere in kurzer Zeitdauer $\Delta t$ ein Wärmeausdeh-

nungs-Gradient $\Delta X = X1 - X2$, bei welchem das erste Bauteil eine relativ große erste Wärmeausdehnung X1 und das zweite Bauteil eine relativ geringe zweite Wärmeausdehnung X2 erfährt. Weiterhin stellt sich auch in kurzer Zeitdauer $\Delta t$ ein großer Temperatur-Gradient $\Delta T = T1 - T2$ ein, wenn sich in dem ersten Bauteil eine erste Temperatur T1 und in dem zweiten Bauteil eine demgegenüber geringere zweite Temperatur T2 einstellt. Mit anderen Worten wird das erste Bauteil 3 durch die von dem Induktor 2 emittierten elektromagnetischen Strahlung schnell erwärmt wird, die Klebeschicht 5 und das zweite Bauteil 4 indessen nicht, nur unwesentlich oder sehr langsam.

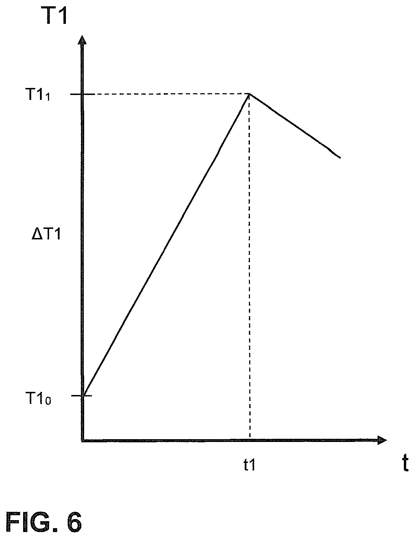

**Fig. 6** illustriert die zeitabhängige und hier vorzugsweise schnelle Erwärmung des ersten Bauteils 3. Es sei hier angenommen, dass zum Zeitpunkt t = t0 das erste Bauteil eine Temperatur $T1_0$ aufweist und die Induktionseinrichtung 10 aktiviert wird, um mittels des Induktors ein elektromagnetisches Feld zu erzeugen, das durch beispielsweise in der Steuerung 8 voreingestellte Parameter definiert wird. Diese Parameter geben hier vorzugsweise vor, dass das elektromagnetische Feld ausschließlich oder hauptsächlich das erste Bauteil 3 erfasst und dass dieses dann schnell und stark erwärmt wird. Zu einem Zeitpunkt t1 wird dann das elektromagnetische Feld von der Steuerung 8 deaktiviert, zu welchem das erste Bauteil 3 eine Temperatur $T1_1$ aufweist. Damit ergibt sich bezogen auf die Heizdauer $\Delta t = t1-t0$ eine erste Erwärmungsgeschwindigkeit des ersten Bauteils 3 von $\Delta T1(T1_1 - T1_0)/\Delta t$. Hingegen ist vorzugsweise die von der Steuerung 8 vorgegebene Heizdauer $\Delta t$ zu kurz, als dass die in dem ersten Bauteil 3 induktiv erzeugte Wärme auf die (gesamte) Klebeschicht 5 und das zweite Bauteil 4 übertragen werden kann. Vielmehr findet zuvor die mechanische Zerstörung der Klebeschicht 5 infolge der sich einstellenden mechanischen Spannungen statt, die von den unterschiedlichen Wärmeausdehnungen X1 und X2 der beiden Bauteile 3, 4 herrühren. Da dabei auch die beiden Bauteile 3, 4 voneinander getrennt werden, wird zwischen ihnen ein Wärmeübergang verhindert oder erschwert.

Der Wärmeausdehnungs-Gradient $\Delta X$ und der Temperatur-Gradient $\Delta T$ bilden sich hier demnach in einer Ebene senkrecht zur Klebeschicht 5 oder zu den Plattenebenen der beiden Bauteile 3, 4 aus. Abhängig von dem Wärmeausdehnungskoeffizienten des ersten Bauteils 3 dehnt sich dieses aufgrund der Temperaturerhöhung infolge der (exklusiven) induktiven Beheizung aus, das zweite Bauteil 4 indes nicht oder nur unwesentlich. Dadurch werden zwischen den beiden Bauteilen 3, 4 mechanische Spannungen und Relativbewegungen hervorgerufen, welche die Klebeschicht 5 mechanisch zerstören. Es kommt dann durch die mechanischen Spannungen und Relativbewegungen zwischen den beiden Bauteilen 3, 4 zu einem erzwungenen Adhäsionsbruch der Klebeschicht 5. Dann können die beiden Bauteile 3, 4 ohne größeren Kraftaufwand voneinander gelöst werden.

In manchen nicht beanspruchten Ausführungsformen kann es allerdings auch bei einer gezielten Erwärmung lediglich des ersten Bauteils 3 durch den Induktor 2 nicht vermieden werden, dass eine direkt an dem ersten Bauteil 3 anhaftende Grenzschicht 6 der Klebeschicht 5 thermisch erweicht oder zerstört wird. Jedoch soll eine Erweichung oder thermische Zerstörung der restlichen Klebeschicht 5 vorzugsweise vermieden werden.

Im vorliegenden Beispiel von **Fig.1** mit durch eine Klebeschicht 5 verbundener plattenförmiger, ebener und hier beispielsweise auch flächiger Bauteile 3, 4 umfassen die infolge des Wärmeausdehnungs-Gradienten $\Delta X$ und des Temperatur-Gradienten $\Delta T$ zwischen den Bauteilen 3, 4 hervorgerufenen mechanischen Spannungen insbesondere Schubspannungen, welche in der Klebeschicht 5 oder parallel zu der Klebeschicht 5 wirkende Scherkräfte zwischen den Bauteilen 3, 4 hervorrufen.

Mit Bezug auf **Fig. 1** sind in den im Folgenden weiteren Ausführungsformen der Vorrichtung 1 identische oder gleich wirkende Elemente mit den gleichen Bezugszahlen gekennzeichnet.

In **Fig. 2** ist eine weitere Ausführungsform der Vorrichtung 1 gezeigt, welche für ein Lösen einer Verbindung aus rohrförmigen Bauteilen 3, 4 ausgebildet ist. Im vorliegenden Fall ummantelt beispielsweise das erste Bauteil 3 das zweite Bauteil 4, wobei radial zwischen den Bauteilen 3, 4 die Klebeschicht 5 mit ihrer Grenzschicht 6 zum ersten Bauteil 3 angeordnet ist. Die Klebschicht 5 verbindet dann eine radial innere Umfangsfläche des ersten Bauteils 3 mit einer radial äußeren Umfangsfläche des zweiten Bauteils 4 adhäsiv. Beispielsweise sind das erste Bauteil 3 und das zweite Bauteil 4 sowie die hier beispielsweise umlaufende Klebeschicht 5 koaxial In Bezug zu einer gemeinsamen Mittelachse der Verbindung 9.

Der Induktor 2 ist hier beispielsweise ebenfalls rohrförmig und umschließt mit einer radial inneren Umfangsfläche hier beispielsweise die Verbindung 9 komplett, wobei die radial innere Umfangsfläche des Induktors 2 hier beispielsweise geringfügig von der radial äußeren Umfangsfläche des ersten Bauteils 3 beabstandet ist.

Analog zum Ausführungsbeispiel von **Fig. 1** erfolgt hier ebenfalls im Wesentlichen ausschließlich eine Erwärmung oder Beheizung des ersten Bauteils 3 durch die Induktionseinrichtung 10 bzw. durch deren Induktor 2, ohne dass dabei auch die Klebschicht 5 und das zweite Bauteil 4 erwärmt werden, weil dann diese Komponenten der Verbindung 9 durch das erste Bauteil von dem elektromagnetischen Feld abgeschirmt werden, welches im Wesentlichen vollständig in das erste Bauteil 3 eingekoppelt wird. Das Erwärmen oder Beheizen erfolgt auch hier durch ein Heizprogramm im Speicher der Steuerung 8 mit vorbestimmten Heizparametern. Beispielsweise kann das Heizprogramm aus einer Anzahl von Heizprogrammen auswählbar sein.

Infolge der (fast) exklusiven Erwärmung des hier radial äußeren Bauteils 3 dehnt sich dieses abhängig von seinem Wärmeausdehnungskoeffizienten in Umfangsrichtung aus, wodurch sich sein Radius vergrößert, während der Radius des unbeheizten hier radial inneren Bauteils 4 sich nicht ändert. Infolgedessen entstehen in radialer Richtung wirkende Zugspannungen zwischen den Bauteilen 3, 4, welche hier senkrecht zu der Klebeschicht 5 wirkende Zugkräfte und hier radiale Relativbewegungen zwischen den Bauteilen 3, 4 hervorrufen. Auch können dadurch Scherkräfte zwischen den Bauteilen 3, 4 entstehen, die dann tangential in Bezug auf die Klebschicht 5 wirken. Diese Kräfte sorgen dafür, dass die Klebeschicht 5 ausschließlich mechanisch zerstört wird, wodurch sich die

Bauteile leicht voneinander lösen lassen. Wie beim vorangehenden Ausführungsbeispiel beschrieben, kann die Erwärmung durch den Induktor 2 auch maximal die Grenzschicht 6 der Klebschicht umfassen, jedoch ohne diese thermisch zu zerstören.

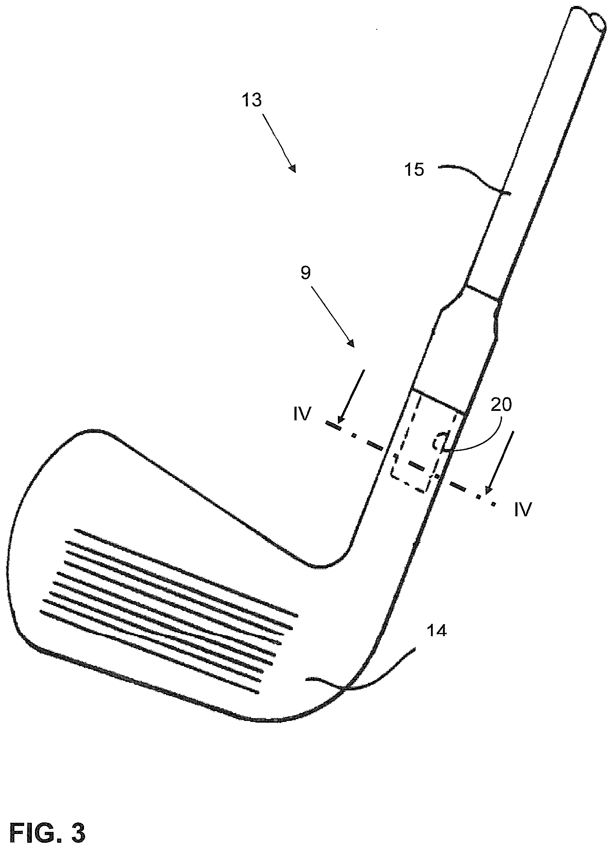

In **Fig. 3** ist ein Golfschläger 13 gezeigt, mit einem beispielsweise aus einem ferromagnetischen Metall bestehenden Kopf 14 und einem beispielsweise aus einem Kunststoff bestehenden Schaft 15. Ein freies Ende des Schafts 15 des Golfschlägers 13 ragt in eine Öffnung 20 eines Halses des Kopfs 14 und ist dort mittels einer Klebeschicht 5 verklebt. Die hier ebenfalls induktiv zu lösende Verbindung 9 umfasst dann den Kopf 14, den Schaft 15 und die beispielsweise radial umlaufende Klebeschicht 5 dazwischen, wobei der Hals des Kopfs 14 und der Schaft 15 im Bereich der Verbindung 9 dann ebenfalls zylindrische bzw. rohrförmige Bauteile darstellen. In der Praxis kommt es vor, dass der Schaft 15 des Golfschlägers 13 abbricht und dann gegen einen Austausch-Schaft gewechselt werden muss.

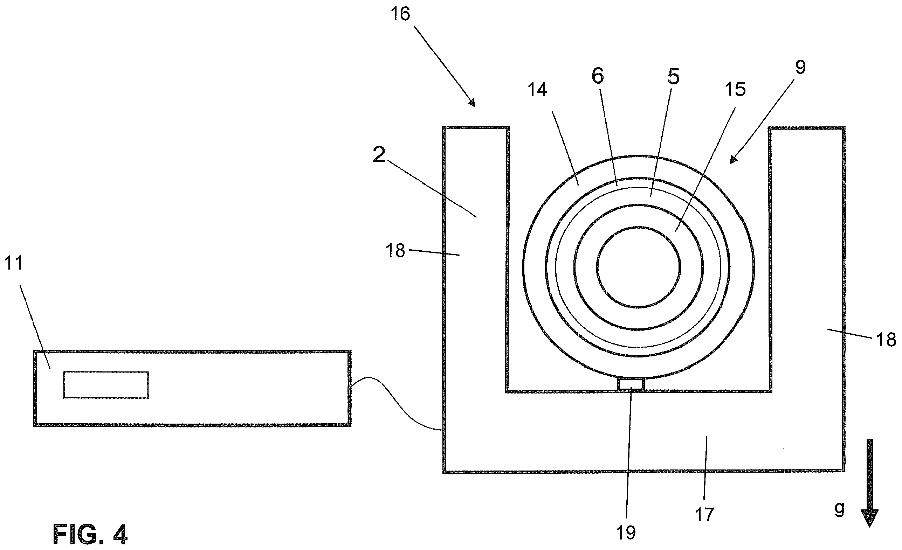

In **Fig.4** ist dann eine weitere Ausführungsform der Vorrichtung 1 gezeigt, welche für ein Lösen der Verbindung des Golfschlägers 13 von **Fig. 3** ausgebildet ist, mit dem in einer beispielsweise im Querschnitt gesehen hufeisenförmigen Aufnahmeeinrichtung 16 der Vorrichtung 1 aufgenommenen Golfschläger 13. Die Vorrichtung 1 ist in Fig. 4 in Gebrauchslage gezeigt, wobei die Richtung der Erdbeschleunigung, aus welcher die Gewichtskraft des Golfschlägers 13 herrührt, durch den Pfeil g gekennzeichnet ist.

In **Fig. 4** ist der Querschnitt des Golfschlägers 13 entlang der Linie IV-IV von **Fig. 3** im Bereich der Verbindung 9 gezeigt. Die Aufnahmeeinrichtung 16 ist ausgebildet und eingerichtet, um den Golfschläger 13 und insbesondere die Verbindung 9 in einer für ein Lösen der Verbindung 9 günstigen oder notwendigen Lage zu halten. Die Verbindung 9 des Golfschlägers 13 ruht hierzu auf einem Boden oder Quersteg 17 der hier beispielsweise hufeisenförmigen Aufnahmeeinrichtung 16, während er von zwei, von dem Boden 17 senkrecht weg ragenden Wangen 18 radial eingefasst wird.

In der Aufnahmeeinrichtung 16 sind beispielsweise in den Wangen 18 und/oder in dem Boden 17 jeweils ein Induktor aufgenommen, der dazu dient, beispielsweise ausschließlich den Hals des Kopfes 14 zu erwärmen, um, wie oben bereits beschrieben, Zugspannungen und Scherspannungen zwischen dem Ende des Schafts 15 und dem Hals des Kopfes 14 zu erzeugen, durch welche dann die Klebeschicht 5 ausschließlich mechanisch zerstört und die Verbindung 9 gelöst wird. Die im Wesentlichen ausschließliche Erwärmung des Halses des Kopfs 14 mittels des von den Induktoren erzeugten elektromagnetischen Felds gelingt hier (auch) durch den äußeren hier teilweisen Umgriff des Halses des Kopfs 14 durch die Induktoren. Dann wird auch hier das elektromagnetische Feld im Wesentlichen vollständig in den Hals des Kopfs 14 eingekoppelt, wodurch dann die Klebschicht 5 und der Schaft 15 von dem elektromagnetischen Feld abgeschirmt sind und sich nicht oder unwesentlich erwärmen.

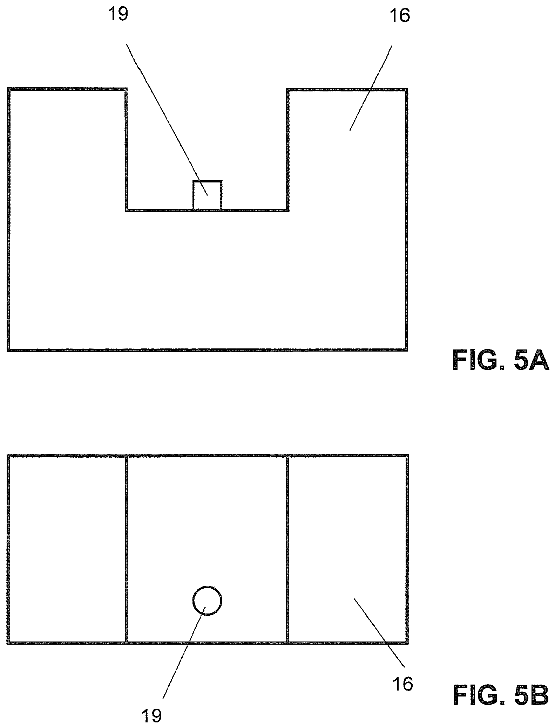

**Fig. 5A** zeigt eine Seitenansicht der Aufnahmeeinrichtung von **Fig. 4** ohne den Golfschläger 13 und **Fig. 5B** eine Draufsicht auf die Aufnahmeeinrichtung 16. Demzufolge ist in einer beispielsweise zentralen Öffnung des Bodens 17 der Aufnahmeeinrichtung 16 ein aus der Öffnung ausfahrbarer und in die Öffnung einfahrbarer Taster 19 aufgenommen, welcher durch die Einfahr- bzw. Ausfahrbewegung einen hier nicht sichtbaren elektrischen Schalter betätigen kann. Der elektrische Schalter ist in einen elektrischen Kreis der Steuerung 8 des Generators 11 geschaltet **(Fig.1, Fig. 2).** Der Taster 19 wird hier beim Einlegen des Golfschlägers 13 in die Aufnahmevorrichtung 16 hier beispielsweise alleine durch die Gewichtskraft des Golfschlägers 13 von der federvorgespannten ausgefahrenen Stellung in die eingefahrene Stellung gebracht **(Fig. 4),** wodurch der elektrische Schalter umschaltet und dadurch die Steuerung 8 des Generators 11 aktiviert wird, um anhand eines beispielsweise vorprogrammierten und gespeicherten Heizprogramms beispielsweise ausschließlich den Hals des Kopfes 14 durch die von den Induktoren emittierte elektromagnetische Feld zu erwärmen, wodurch die Verbindung 9 gelöst wird.

In dem gespeicherten Heizprogramm ist beispielsweise eine Zeitdauer der Aktivierung der Induktionseinrichtung 10 bzw. der Beheizung der Verbindung 9 festgelegt, wobei die Induktionseinrichtung 10 nach Ablauf dieser festgelegten Zeitdauer automatisch deaktiviert oder in einen inaktiven Zustand versetzt wird. In diesem Fall wird die Induktionseinrichtung 10 zwar durch das Einlegen des Golfschlägers 13 in die Aufnahmeeinrichtung 16 aktiviert, jedoch ist dann hier die Heizdauer bevorzugt unabhängig von dem Entfernen des Golfschlägers 13 aus der Aufnahmeeinrichtung, bei welchem der Taster 19 automatisch in die ausgefahrene Stellung gerät, weil er dann von der Gewichtskraft des Golfschlägers 13 entlastet wird.

Bezugszeichenliste

| 1 | Vorrichtung |
| 2 | Induktor |
| 3 | erstes Bauteil |
| 4 | zweites Bauteil |
| 5 | Klebeschicht |
| 6 | Grenzschicht (Adhäsionsschicht) |
| 7 | Taster |
| 8 | Steuerung |
| 9 | Verbindung |
| 10 | Induktionseinrichtung |
| 11 | Generator |
| 12 | Kabel |
| 13 | Golfschläger |
| 14 | Kopf |
| 15 | Schaft |
| 16 | Aufnahmeeinrichtung |
| 17 | Boden |
| 18 | Wangen |
| 19 | Taster |
| 20 | Öffnung |
| g | Erdbeschleunigung |
| T1 | erste Temperatur |
| T2 | zweite Temperatur |
| X1 | erste Wärmeausdehnung |
| X2 | zweite Wärmeausdehnung |
| $\Delta$T | Temperatur-Gradient |
| $\Delta$X | Wärmeausdehnungs-Gradient |

**Patentansprüche**

1. Verfahren zum Lösen einer Verbindung (9), welche wenigstens zwei Bauteile, ein erstes Bauteil (3) und ein zweites Bauteil (4), und wenigstens eine Klebeschicht (5) zwischen den wenigstens zwei Bauteilen (3, 4) aufweist, durch welche die wenigstens zwei Bauteile (3, 4) miteinander verbunden sind, wobei wenigstens das erste Bauteil (3) elektrisch leitfähig ist, umfassend einen Schritt des Erwärmens wenigstens des ersten Bauteils (3) mittels eines elektromagnetischen Felds, wobei das Erwärmen wenigstens des ersten Bauteils (3) mittels des elektromagnetischen Felds derart erfolgt, dass zwischen den wenigstens zwei Bauteilen (3, 4) ein Wärmeausdehnungs-Gradient ($\Delta$X) und/oder ein Temperatur-Gradient ($\Delta$T) entsteht, der zwischen den wenigstens zwei Bauteilen (3, 4) Relativbewegungen und mechanische Spannungen hervorruft, welche die wenigstens eine Klebeschicht (5) ausschließlich mechanisch zerstören, wobei wenigstens das erste Bauteil (3) mittels des elektromagnetischen Felds mit einer Temperatur (T1) und/oder mit einer Erwärmungsgeschwindigkeit (Temperaturzunahme je Zeit, ($\Delta$T1/t) erwärmt wird, durch welche

   a) einerseits der Wärmeausdehnungs-Gradient ($\Delta$X) und/oder der Temperatur-Gradient ($\Delta$T) zwischen den wenigstens zwei Bauteilen (3, 4) entsteht, der zwischen den wenigstens zwei Bauteilen (3, 4) die Relativbewegungen und die mechanischen Spannungen hervorruft, welche die wenigstens eine Klebeschicht (5) ausschließlich mechanisch zerstören, aber durch welche

b) andererseits eine thermische Zerstörung der wenigstens einen Klebeschicht (5) vermieden wird.

2. Verfahren nach Anspruch 1, **dadurch gekennzeichnet, dass** die wenigstens zwei Bauteile flächige ebene oder unebene Bauteile oder plattenförmige Bauteile sind und die mechanischen Spannungen Schubspannungen umfassen, welche in der wenigstens einen Klebeschicht (5) oder parallel zu der wenigstens einen Klebeschicht (5) wirkende Scherkräfte und/oder Relativbewegungen zwischen den Bauteilen hervorrufen.

3. Verfahren nach einem der vorhergehenden Ansprüche, **dadurch gekennzeichnet, dass** die Bauteile (3, 4) wenigstens im Bereich der wenigstens einen Klebeschicht (5) ineinander ragende rohrförmige oder zylindrische oder konische Bauteile oder Bauteile mit Polygon-Querschnitt sind und die mechanischen Spannungen in radialer Richtung wirkende Zugspannungen zwischen den Bauteilen umfassen, welche senkrecht zu der wenigstens einen Klebeschicht wirkenden Zugkräfte und/oder Relativbewegungen zwischen den Bauteilen hervorrufen.

4. Verfahren nach Anspruch 3, **dadurch gekennzeichnet, dass** ein Kopf (14) eines Golfschlägers (13) als erstes Bauteil und ein Ende eines Schafts (15) des Golfschlägers (13) als zweites Bauteil herangezogen wird, wobei die wenigstens eine Klebeschicht (5) radial zwischen dem in eine Öffnung (20) des Kopfs (14) ragenden Ende des Schafts (15) und der Öffnung (20) des Kopfs (14) ausgebildet ist.

5. Verfahren nach einem der vorhergehenden Ansprüche, **dadurch gekennzeichnet, dass** das elektromagnetische Feld mittels einer Induktionseinrichtung (10) erzeugt wird, welche wenigstens einen Induktor (2) umfasst.

6. Verfahren nach Anspruch 5, **dadurch gekennzeichnet, dass** der Induktor (2) derart an dem ersten Bauteil (3) angeordnet und die Induktionseinrichtung (10) derart gesteuert wird, dass das elektromagnetische Feld im Wesentlichen vollständig in das erste Bauteil (3) eingekoppelt wird.

7. Vorrichtung (1) zum Lösen einer Verbindung (9), welche wenigstens zwei Bauteile, ein erstes Bauteil (3) und ein zweites Bauteil (4), und wenigstens eine Klebeschicht (5) zwischen den wenigstens zwei Bauteilen (3, 4) aufweist, durch welche die wenigstens zwei Bauteile (3, 4) miteinander verbunden sind, wobei wenigstens das erste Bauteil (3) elektrisch leitfähig ist, umfassend eine durch eine Steuerung (8) gesteuerte oder geregelte Heizeinrichtung (10), welche ausgebildet und eingerichtet ist, wenigstens das erste Bauteil (3) mittels eines elektromagnetischen Felds zu erwärmen, wobei die Heizeinrichtung (10) mittels der Steuerung (8) derart gesteuert oder geregelt ist, dass infolge der Erwärmung wenigstens des ersten Bauteils (3) mittels des elektromagnetischen Felds zwischen den wenigstens zwei Bauteilen (3, 4) ein Wärmeausdehnungs-Gradient ($\Delta X$) und/oder ein Temperatur-Gradient ($\Delta T$) entsteht, der zwischen den wenigstens zwei Bauteilen (3, 4) Relativbewegungen und mechanische Spannungen hervorruft, welche die wenigstens eine Klebeschicht (5) ausschließlich mechanisch zerstören, wobei die Heizeinrichtung (10) mittels der Steuerung (8) derart gesteuert oder geregelt ist, dass wenigstens das erste Bauteil (3) mittels des elektromagnetischen Felds mit einer Temperatur ($T1$) und/oder mit einer Erwärmungsgeschwindigkeit (Temperaturzunahme je Zeit, ($\Delta T1/t$)) erwärmt wird, durch welche

a) einerseits der Wärmeausdehnungs-Gradient ($\Delta X$) und/oder der Temperatur-Gradient ($\Delta T$) zwischen den wenigstens zwei Bauteilen (3, 4) entsteht, der zwischen den wenigstens zwei Bauteilen (3, 4) die Relativbewegungen und die mechanischen Spannungen hervorruft, welche die wenigstens eine Klebeschicht (5) ausschließlich mechanisch zerstören, aber durch welche

b) andererseits eine thermische Zerstörung der wenigstens einen Klebeschicht (5) vermieden wird.

8. Vorrichtung nach Anspruch 7, **dadurch gekennzeichnet, dass** sie ausgebildet und eingerichtet ist zum Lösen einer Verbindung (9), bei welcher die Bauteile (3, 4) flächige, ebene oder unebene Bauteile oder plattenförmige Bauteile sind, wobei die mechanischen Spannungen Schubspannungen umfassen, welche in der wenigstens einen Klebeschicht (5) oder parallel zu der wenigstens einen Klebeschicht (5) wirkende Scherkräfte und/oder Relativbewegungen zwischen den Bauteilen (3, 4) hervorrufen, welche im Wesentlichen parallel zu den Bauteilen (3, 4) sind.

9. Vorrichtung nach Anspruch 7, **dadurch gekennzeichnet, dass** sie ausgebildet und eingerichtet ist zum Lösen einer Verbindung (9), bei welcher die Bauteile (3, 4) wenigstens im Bereich der wenigstens einen Klebeschicht (5) ineinander ragende rohrförmige oder zylindrische oder konische Bauteile oder Bauteile mit einem Polygon-Querschnitt sind, wobei die mechanischen Spannungen in radialer Richtung wirkende Zugspannungen zwischen den Bauteilen (3, 4) umfassen, welche senkrecht zu der wenigstens einen Klebeschicht (5) wirkende Zugkräfte und/oder Relativbewegungen zwischen den Bauteilen (3, 4) hervorrufen, welche bezogen auf die Bauteile (3, 4) in radialer Richtung verlaufen.

10. Vorrichtung nach Anspruch 9, **dadurch gekennzeichnet, dass** sie ausgebildet und eingerichtet ist zum Lösen einer Verbindung (9), welche einen Kopf (14) eines Golfschlägers (13) als erstes Bauteil und ein Ende eines Schafts (15) des Golfschlägers (13) als zweites Bauteil sowie wenigstens eine Klebeschicht (5) umfasst, die radial zwischen dem in eine Öffnung (20) des Kopfs (14) ragenden Ende des Schafts (15) und der Öffnung (20) des Kopfs (14) ausgebildet ist.

11. Vorrichtung nach Anspruch 10, **dadurch gekennzeichnet, dass** sie eine Aufnahmeeinrichtung (16) für den Golfschläger (13) aufweist, welche mit der Steuerung (8) derart zusammenwirkt, dass die Heizeinrichtung (10) insbesondere nur dann und insbesondere automatisch aktiviert wird, wenn der Golfschläger (13) in der Aufnahmeeinrichtung (16) aufgenommen ist.

12. Vorrichtung nach Anspruch 11, **dadurch gekennzeichnet, dass** die Aufnahmeeinrichtung (16) einen derart angeordneten und mit der Steuerung (8) zusammenwirkenden elektrischen Schalter aufweist, dass wenn der Golfschläger (13) von der Aufnahmeeinrichtung (16) aufgenommen ist oder in der Aufnahmeeinrichtung (16) aufgenommen wird, der elektrische Schalter automatisch in eine erste Stellung betätigt oder geschaltet wird, in welcher die Steuerung (8) die Heizeinrichtung (10) aktiviert, um die Verbindung (9) elektromagnetisch zu erwärmen.

13. Vorrichtung nach Anspruch 12, **dadurch gekennzeichnet, dass** der elektrische Schalter und die Aufnahmeeinrichtung (16) angeordnet und ausgebildet sind, dass wenn der Golfschläger (13) in der Aufnahmeeinrichtung (16) aufgenommen ist oder in der Aufnahmeeinrichtung (16) aufgenommen wird, das Gewicht des Golfschlägers (13) wenigstens dazu beiträgt, den elektrischen Schalter in die erste Stellung zu betätigen oder zu schalten.

14. Vorrichtung nach Anspruch 12 oder 13, **dadurch gekennzeichnet, dass** der Schalter mit der Steuerung (8) derart zusammenwirkt, dass wenn der Golfschläger (13) aus der Aufnahmeeinrichtung (16) entfernt wird, der Schalter in eine zweite Stellung betätigt oder geschaltet wird, in welcher die Steuerung (8) die Heizeinrichtung (10) deaktiviert oder in einen inaktiven Zustand versetzt.

15. Vorrichtung nach einem der Ansprüche 7 bis 14, **dadurch gekennzeichnet, dass** die Heizeinrichtung (10) eine Induktionseinrichtung mit wenigstens einem Induktor (2) umfasst.

16. Vorrichtung nach Anspruch 15, **dadurch gekennzeichnet, dass** der Induktor (2) ausgebildet und eingerichtet ist, derart an dem ersten Bauteil (3) oder im Bereich des ersten Bauteils (3) angeordnet zu werden, dass das elektromagnetische Feld im Wesentlichen vollständig in das erste Bauteil (3) eingekoppelt wird.

## Claims

1. Method for releasing a connection (9), which has at least two components, a first component (3) and a second component (4), and at least one adhesive layer (5) between the at least two components (3, 4), through which the at least two components (3, 4) are connected to one another, wherein at least the first component (3) is electrically conductive, comprising a step of heating at least the first component (3) by means of an electromagnetic field, wherein heating at least the first component (3) by means of the electromagnetic field occurs such that a thermal expansion gradient ($\Delta X$) and/or a temperature gradient ($\Delta T$) is created between the at least two components (3, 4), which causes relative movements and mechanical stresses between the at least two components (3, 4), which only mechanically destroy the at least one adhesive layer (5), wherein at least the first component (3) is heated by means of the electromagnetic field at a temperature (T1) and/or at a heating rate (temperature increase over time, ($\Delta T1/t$), by means of which,

   a) on the one hand, the thermal expansion gradient ($\Delta X$) and/or the temperature gradient ($\Delta T$) is created between the at least two components (3, 4), which causes the relative movements and the mechanical stresses between the at least two components (3, 4), which only mechanically destroy the at least one adhesive layer (5), but through which,
   b) on the other hand, thermal destruction of the at least one adhesive layer (5) is prevented.

2. Method according to claim 1, **characterized in that** the at least two components are flat, even or uneven components or plate-shaped components and the mechanical stresses comprise shear stresses, which cause shear forces acting in the at least one adhesive layer (5) or parallel to the at least one adhesive layer (5) and/or relative movements between the components.

3. Method according to any one of the preceding claims, **characterized in that** the components (3, 4) are tubular or cylindrical or conical components or components with a polygonal cross-section that are inserted into one another, at least in the region of the at least one adhesive layer (5), and the mechanical stresses comprise tensile stresses acting in a radial direction between the components, which cause tensile forces acting perpendicular to the at least one adhesive layer and/or relative movements between the components.

4. Method according to claim 3, **characterized in that** a head (14) of a golf club (13) is used as the first component and an end of a shaft (15) of the golf club (13) is used as the second component, wherein the at least one adhesive layer (5) is designed radially between the end of the shaft (15) inserted into an opening (20) of the head (14) and the opening (20) of the head (14).

5. Method according to any one of the preceding claims, **characterized in that** the electromagnetic field is generated by means of an induction apparatus (10), which comprises at least one inductor (2).

6. Method according to claim 5, **characterized in that** the inductor (2) is arranged on the first component (3) and the induction apparatus (10) is controlled such that the electromagnetic field is substantially completely coupled into the first component (3).

7. Device (1) for releasing a connection (9), which has at least two components, a first component (3) and a second component (4), and at least one adhesive layer (5) between the at least two components (3, 4), by means of which the at least two components (3, 4) are connected to one another, wherein at least the first component (3) is electrically conductive, comprising a heating apparatus (10) controlled or regulated by a controller (8), which is designed and configured to heat at least the first component (3) by means of an electromagnetic field, wherein the heating apparatus (10) is controlled or regulated by means of the controller (8) such that, as a result of heating at least the first component (3) by means of the electromagnetic field, a thermal expansion gradient ($\Delta X$) and/or a temperature gradient ($\Delta T$) is created between the at least two components (3, 4), which causes relative movements and mechanical stresses between the at least two components (3, 4), which only mechanically destroy the at least one adhesive layer (5), wherein the heating apparatus (10) is controlled or regulated by means of the controller (8) such that at least the first component (3) is heated by means of the electromagnetic field at a temperature ($T1$) and/or at a heating rate (temperature increase over time, ($\Delta T1/t$), by means of which,

a) on the one hand, the thermal expansion gradient ($\Delta X$) and/or the temperature gradient ($\Delta T$) is created between the at least two components (3, 4), which causes the relative movements and the mechanical stresses between the at least two components (3, 4), which only mechanically destroy the at least one adhesive layer (5), but through which,
b) on the other hand, thermal destruction of the at least one adhesive layer (5) is prevented.

8. Device according to claim 7, **characterized in that** it is designed and configured to release a connection (9), in which the components (3, 4) are flat, even or uneven components or plate-shaped components, wherein the mechanical stresses comprise shear stresses, which cause shear forces acting in the at least one adhesive layer (5) or parallel to the at least one adhesive layer (5) and/or relative movements between the components (3, 4), which are substantially parallel to the components (3, 4).

9. Device according to claim 7, **characterized in that** it is designed and configured to release a connection (9), in which the components (3, 4) are tubular or cylindrical or conical components or components with a polygonal cross-section that are inserted into one another, at least in the region of the at least one adhesive layer (5), wherein the mechanical stresses comprise tensile stresses acting in a radial direction between the components (3, 4), which cause tensile forces acting perpendicular to the at least one adhesive layer (5) and/or relative movements between the components (3, 4), which extend in a radial direction relative to the components (3, 4).

10. Device according to claim 9, **characterized in that** it is designed and configured to release a connection (9), which comprises a head (14) of a golf club (13) as the first component and an end of a shaft (15) of the golf club (13) as the second component, as well as at least one adhesive layer (5), which is formed radially between the end of the shaft (15) inserted into an opening (20) of the head (14) and the opening (20) of the head (14).

11. Device according to claim 10, **characterized in that** it has a holding apparatus (16) for the golf club (13), which interacts with the controller (8) such that the heating apparatus (10) is automatically activated in particular only if and when the golf club (13) is received in the holding apparatus (16).

12. Device according to claim 11, **characterized in that** the holding apparatus (16) has an electrical switch arranged and interacting with the controller (8) such that, when the golf club (13) is received by the holding apparatus (16) or received in the holding apparatus (16), the electrical switch is automatically actuated or switched into a first position, in which the controller (8) activates the heating apparatus (10), in order to electromagnetically heat the connection (9).

13. Device according to claim 12, **characterized in that** the electrical switch and the holding apparatus (16) are arranged and designed such that when the golf club (13) is received by the holding apparatus (16) or is received in the holding apparatus (16), the weight of the golf club (13) at least contributes to actuation or switching of the electrical switch into the first position.

14. Device according to claim 12 or 13, **characterized in that** the switch interacts with the controller (8) such that when the golf club (13) is removed from the holding apparatus (16), the switch is actuated or switched into a second position, in which the controller (8) deactivates the heating apparatus (10) or places it in an inactive state.

15. Device according to any one of claims 7 to 14, **characterized in that** the heating apparatus (10) comprises an induction apparatus with at least one inductor (2).

16. Device according to claim 15, **characterized in that** the inductor (2) is designed and configured to be arranged on the first component (3) or in the region of the first component (3) such that the electromagnetic field is substantially completely coupled into the first component (3).


**Revendications**

1. Procédé de détachement d'une liaison (9) qui présente au moins deux composants, un premier composant (3) et un second composant (4) et au moins une couche de colle (5) entre les au moins deux composants (3, 4), par lesquels les au moins deux composants (3, 4) sont reliés entre eux, dans lequel au moins le premier composant (3) est électroconducteur, comprenant une étape de chauffage d'au moins le premier composant (3) au moyen d'un champ électromagnétique, dans lequel le chauffage au moins du premier composant (3) est effectué au moyen du champ électromagnétique de telle manière qu'un gradient de dilatation thermique ($\Delta X$) et/ou un gradient de température ($\Delta T$) se produise entre les au moins deux composants (3, 4), gradient qui suscite entre les au moins deux composants (3, 4) des mouvements relatifs et des tensions mécaniques qui détruisent la au moins une couche de colle (5) exclusivement mécaniquement, dans lequel au moins le premier composant (3) est chauffé au moyen du champ électromagnétique à une température (T1) et/ou à une vitesse de chauffage (hausse de la température par temps ($\Delta T1/t$), par lequel

    a) d'une part le gradient de dilatation thermique ($\Delta X$) et/ou le gradient de température ($\Delta T$) se produit entre les au moins deux composants (3, 4), gradient qui suscite entre les au moins deux composants (3, 4) les mouvements relatifs et les tensions mécaniques qui détruisent exclusivement mécaniquement la au moins une couche de colle (5) mais par lequel
    b) d'autre part une destruction thermique de l'au moins une couche de colle (5) est évitée.

2. Procédé selon la revendication 1, **caractérisé en ce que** les au moins deux composants sont des composants réguliers ou irréguliers plans ou des composants en forme de plaque et les tension mécaniques comprennent des contraintes de cisaillement qui suscitent des forces de cisaillement et/ou mouvements relatifs agissant dans l'au moins une couche de colle (5) ou parallèlement à l'au moins une couche de colle (5) entre les composants.

3. Procédé selon l'une quelconque des revendications précédentes, **caractérisé en ce que** les composants (3, 4) sont des composants tubulaires ou cylindriques ou coniques pénétrant les uns dans les autres au moins dans la zone de l'au moins une couche de colle (5) ou des composants avec une section transversale polygonale et les tensions mécaniques comprennent des contraintes de traction agissant dans le sens radial entre les composants qui suscitent des forces de traction et/ou mouvements relatifs agissant perpendiculairement à la au moins une couche de colle entre les composants.

4. Procédé selon la revendication 3, **caractérisé en ce qu'**une tête (14) d'un club de golf (13) est utilisée comme premier composant et une extrémité d'une tige (15) du club de golf (13) comme second composant, dans lequel la au moins une couche de colle (5) est formée radialement entre l'extrémité de la tige (15) pénétrant dans une ouverture (20) de la tête (14) et l'ouverture (20) de la tête (14).

5. Procédé selon l'une quelconque des revendications précédentes, **caractérisé en ce que** le champ électromagnétique est généré au moyen d'un dispositif d'induction (10) qui comprend au moins un inducteur (2).

6. Procédé selon la revendication 5, **caractérisé en ce que** l'inducteur (2) est agencé au niveau du premier composant (3) et le dispositif d'induction (10) est commandé de telle manière que le champ électromagnétique soit injecté sensiblement complètement dans le premier composant (3).

7. Dispositif (1) de détachement d'une liaison (9) qui présente au moins deux composants, un premier composant (3) et un second composant (4) et au moins une couche de colle (5) entre les au moins deux composants (3, 4) par laquelle les au moins deux composants (3, 4) sont reliés entre eux, dans lequel au moins le premier composant (3) est électroconducteur, comprenant un dispositif de chauffage (10) commandé ou régulé par une commande (8) qui est formé et conçu afin de chauffer au moins le premier composant (3) au moyen d'un champ électromagnétique, dans lequel le dispositif de chauffage (10) est commandé ou régulé au moyen de la commande (8) de telle manière qu'entre les au moins deux composants (3, 4) un gradient de dilatation thermique (ΔX) et/ou un gradient de température (ΔT) se produise à la suite du chauffage au moins du premier composant (3) au moyen du champ électromagnétique, gradient qui suscite entre les au moins deux composants (3, 4) des mouvements relatifs et des tensions mécaniques qui détruisent la au moins une couche de colle (5) exclusivement mécaniquement, dans lequel le dispositif de chauffage (10) est commandé ou régulé au moyen de la commande (8) de telle manière au moins le premier composant (3) soit chauffé au moyen du champ électromagnétique à une température (T1) et/ou à une vitesse de chauffage (hausse de la température par temps (ΔT1/t), par lequel

   a) d'une part le gradient de dilatation thermique (ΔX) et/ou le gradient de température (ΔT) se produit entre les au moins deux composants (3, 4), gradient qui suscite entre les au moins deux composants (3, 4) les mouvements relatifs et les tensions mécaniques qui détruisent exclusivement mécaniquement la au moins une couche de colle (5) mais par lequel
   b) d'autre part une destruction thermique de l'au moins une couche de colle (5) est évitée.

8. Procédé selon la revendication 7, **caractérisé en ce qu'**il est formé et conçu pour le détachement d'une liaison (9), pour laquelle les composants (3, 4) sont des composants réguliers ou irréguliers plans ou des composants en forme de plaque, dans lequel les tension mécaniques comprennent des contraintes de cisaillement qui suscitent des forces de cisaillement et/ou mouvements relatifs agissant dans l'au moins une couche de colle (5) ou parallèlement à l'au moins une couche de colle (5) entre les composants qui sont sensiblement parallèles aux composants (3 4).

9. Dispositif selon la revendication 7, **caractérisé en**

ce qu'il est formé et conçu pour le détachement d'une liaison (9), pour laquelle les composants (3, 4) sont des composants tubulaires ou cylindriques ou coniques pénétrant les uns dans les autres au moins dans la zone de la au moins une couche de colle (5) ou des composants avec une section transversale polygonale, dans lequel les tensions mécaniques comprennent des contraintes de traction agissant dans le sens radial entre les composants (3, 4) qui suscitent des forces de traction et/ou mouvements relatifs agissant perpendiculairement à la au moins une couche de colle (5) entre les composants (3, 4) qui s'étendent par rapport aux composants (3, 4) dans le sens radial.

10. Dispositif selon la revendication 9, **caractérisé en ce qu'**il est formé et conçu pour le détachement d'une liaison (9) qui comprend une tête (14) d'un club de golf (13) comme premier composant et une extrémité d'une tige (15) du club de golf (13) comme second composant ainsi qu'au moins une couche de colle (5) qui est formée radialement entre l'extrémité de la tige (15) pénétrant dans une ouverture (20) de la tête (14) et l'ouverture (20) de la tête (14).

11. Dispositif selon la revendication 10, **caractérisé en ce qu'**il présente un dispositif de réception (16) pour le club de golf (13) qui coagit avec la commande (8) de telle manière que le dispositif de chauffage (10) soit activé seulement ensuite et en particulier automatiquement lorsque le club de golf (13) est reçu dans le dispositif de réception (16).

12. Dispositif selon la revendication 11, **caractérisé en ce que** le dispositif de réception (16) présente un commutateur électrique coagissant avec la commande (8) et agencé de telle manière que lorsque le club de golf (13) est reçu par le dispositif de réception (16) ou est reçu dans le dispositif de réception (16), le commutateur électrique est actionné ou commuté automatiquement dans une première position, dans laquelle la commande (8) active le dispositif de chauffage (10) afin de chauffer la liaison (9) par voie électromagnétique.

13. Dispositif selon la revendication 12, **caractérisé en ce que** le commutateur électrique et le dispositif de réception (16) sont agencés et formés de telle manière que lorsque le club de golf (13) est reçu par le dispositif de réception (16) ou est reçu dans le dispositif de réception (16), le poids du club de golf (13) contribue au moins à actionner ou commuter le commutateur électrique dans la première position.

14. Dispositif selon la revendication 12 ou 13, **caractérisé en ce que** le commutateur coagit avec la commande (8) de telle manière que lorsque le club de golf (13) est retiré du dispositif de réception (16), le commutateur est actionné ou commuté dans une seconde position, dans laquelle la commande (8) désactive le dispositif de chauffage (10) ou l'amène dans un état inactif.

15. Dispositif selon l'une quelconque des revendications 7 à 14, **caractérisé en ce que** le dispositif de chauffage (10) comprenant un dispositif d'induction avec au moins un inducteur (2).

16. Dispositif selon la revendication 15, **caractérisé en ce que** l'inducteur (2) est formé et conçu afin d'être agencé au niveau du premier composant (3) ou dans la zone du premier composant (3) de telle manière que le champ électromagnétique soit injecté sensiblement complètement dans le premier composant (3).

**FIG. 1**

$$\Delta X = X1 - X2$$
$$\Delta T = T1 - T2$$

**FIG. 2**

**FIG. 3**

FIG. 4

19    16

**FIG. 5A**

19    16

**FIG. 5B**

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005055611 A1
- JP 4552066 B

- DE 202008016180 U1